# DEMANDE DE BREVET EUROPEEN

(11) **EP 2 950 569 A1**
(43) Date de publication de la demande: **02.12.2015**
(21) Numéro de dépôt: 14305803.0
(22) Date de dépôt: 28.05.2014
(51) Int. Cl.: H04W 12/06, H04W 8/24, H04W 92/08, H04L 29/06

(54) **Procédé de déclenchement d'une session OTA entre un terminal et un serveur distant, terminal, SIM/UICC/eUICC carte et serveur correspondants**

(71) Demandeur: Gemalto SA, 92190 Meudon (FR)
(72) Inventeur: Berard, Xavier, 13705 La Ciotat (FR); Preulier, Eric, 13705 La Ciotat (FR); Faure, Frédéric, 13705 La Ciotat (FR)

(57) **Abrégé**

L'invention concerne notamment un procédé de déclenchement d'une session OTA (22) entre un terminal (10) et un serveur distant (13), le terminal (10) comprenant un agent d'administration (12) et un élément de sécurité (11, carte SIM/UICC/eUICC) ne comprenant pas d'interface BIP.

Selon l'invention, l'élément de sécurité (11) comprend une application proxy (16), et le procédé consiste à :
a- Transmettre du serveur distant (13) à l'application proxy (16) un message de demande de connexion de l'élément de sécurité (11);
b- Stocker le message dans l'application proxy (16) ;
c- Transmettre le message à l'agent d'administration (12) lorsque ce dernier interroge l'application proxy (16) pour savoir si l'application proxy (16) a un message à lui transmettre ;
d- Ouvrir la session OTA (22) entre l'agent d'administration (12) et le serveur distant (13).

## Description

Le domaine de l'invention est celui des télécommunications et concerne plus précisément un procédé permettant d'établir une session OTA entre un terminal de télécommunications et un serveur distant.

Dans un réseau de télécommunications, il est souvent nécessaire de pouvoir adresser, à partir d'un serveur distant, par exemple un serveur OTA (Over The Air en anglais) un élément de sécurité, tel qu'une carte Sim ou UICC, coopérant avec un terminal de télécommunications, tel qu'un téléphone mobile, un ordinateur portable, une tablette ou un smartphone. Cette administration consiste à télécharger dans l'élément de sécurité une mise à jour d'un logiciel, une nouvelle application ou de permettre à l'utilisateur du terminal de changer d'opérateur (télécharger un nouvel abonnement).

Pour cet adressage, généralement réalisé en http, il est nécessaire d'ouvrir un canal de communication de données entre le serveur et l'élément de sécurité.

Certains terminaux comprennent un agent d'administration apte à ouvrir un tel canal de télécommunication. Un tel agent d'administration est par exemple décrit dans le standard « GlobalPlatform Device Secure Element Remote Application Management ».

L'agent d'administration est compris dans le terminal et non pas dans l'élément de sécurité. L'élément de sécurité est soit une carte Sim, un UICC ou un eUICC (embedded UICC en anglais) tel que spécifié dans la recommandation ETSI TS 103383 (Smart Cards ; Embedded UICC ; Requirements Specification). Un eUICC est un élément de sécurité administrable à distance comme un UICC, sauf qu'il est difficilement extractible du terminal (de taille réduite, inaccessible ou alors soudé).

L'agent d'administration est notamment nécessaire lorsqu'il s'agit d'administrer un UICC ou un eUICC compris dans un terminal ne comprenant pas d'interface BIP (Bearer Independent Protocol en anglais) pour communiquer avec l'UICC ou l'eUICC. Ceci est notamment le cas dans les terminaux de type M2M (Machine to Machine en anglais) où on cherche à limiter le coût des terminaux et donc à éviter d'utiliser une interface BIP. Il peut en aller de même pour les terminaux grands publics.

Les standards GlobalPlatform Secure Element Remote Administration Management (version 1.0 de mai 2011) et OMA Smartcard Web Server (version 1.2.1 de septembre 2013) proposent des solutions pour déclencher des sessions d'administration d'éléments de sécurité à l'aide d'agents d'administration compris dans des terminaux. Le problème est que ces standards n'adressent pas les points suivants :
- il n'y a pas de solution standard pour envoyer un message à une application, par exemple mobile. Un serveur distant, tel qu'un serveur OTA ou un serveur bancaire par exemple, qui souhaite déclencher une session d'administration avec l'élément de sécurité via l'agent d'administration, doit connaître quel message de 'push' (transmis du serveur vers le terminal) il doit transmettre en fonction du système d'exploitation du terminal (Android, iOS,...) et du terminal dans lequel est compris l'élément de sécurité ;
- le niveau de sécurité assuré par le service destiné à envoyer un tel message via le serveur distant est généralement non connu.

De plus, dans certaines situations, il n'existe pas de tel service de messagerie apte à adresser une application dans le terminal, par exemple dans le cas de terminaux M2M qui ont un système d'exploitation propriétaire et qui ne proposent pas de telle fonction comme le 'push' WAP (Wireless Application Protocol en anglais).

La présente invention a notamment pour objectif de remédier à ces inconvénients.

Plus précisément, un des objectifs de l'invention est de fournir un procédé, un élément de sécurité et un terminal comprenant cet élément de sécurité, permettant d'assurer une administration à distance de l'élément de sécurité, dans le cas où un agent d'administration est présent au niveau du terminal et donc que le terminal ne dispose pas d'une interface BIP (c'est à dire que l'élément de sécurité ne comporte pas lui même d'agent d'administration apte à entrer directement en communication avec le serveur distant).

A cet effet, l'invention propose notamment un procédé de déclenchement d'une session OTA entre un terminal et un serveur distant, le terminal comprenant un agent d'administration et un élément de sécurité. Selon l'invention, l'élément de sécurité comprend une application proxy et le procédé consiste à :
a- Transmettre du serveur distant à l'application proxy un message de demande de connexion de l'élément de sécurité ;
b- Stocker le message dans l'application proxy ;
c- Transmettre le message à l'agent d'administration lorsque ce dernier interroge l'application proxy pour savoir si l'application proxy a un message à lui transmettre ;
d- Ouvrir la session OTA entre l'agent d'administration et le serveur distant.

De préférence, l'étape -d- est mise en oeuvre afin d'administrer l'élément de sécurité.

Dans un autre mode de mise en oeuvre, l'étape -d- est mise en oeuvre afin d'administrer un autre élément de sécurité coopérant avec le terminal.

L'élément de sécurité est préférentiellement un UICC ou un eUICC.

L'autre élément de sécurité est avantageusement une carte micro SD.

Avantageusement, l'étape -c-consiste à régulièrement interroger l'application proxy par l'agent d'administration afin de vérifier si l'application proxy a un message à lui transmettre.

Préférentiellement, la session OTA est ouverte à l'aide de paramètres compris dans le message transmis lors de l'étape -a-.

Avantageusement, l'application proxy comprend une API permettant à l'agent d'administration de l'interroger à l'aide d'une commande AT.

Cette commande AT est préférentiellement une commande AT + CSIM ou AT + CGLA.

L'invention concerne également un terminal comprenant un agent d'administration et un élément de sécurité, l'élément de sécurité comprenant une application proxy permettant de mettre en oeuvre le procédé selon l'invention.

L'invention concerne également un élément de sécurité 11 comprenant une application proxy 16 apte à mettre en oeuvre un tel procédé.

L'invention concerne également un serveur apte à transmettre à une application proxy comprise dans un élément de sécurité une demande de déclenchement d'une session OTA et à établir la session OTA à la demande d'un agent d'administration compris dans un terminal.

Dans un premier mode de mise en oeuvre, la session OTA est établie entre l'élément de sécurité et le serveur par l'intermédiaire de l'agent d'administration.

Dans un second mode de mise en oeuvre, la session OTA est établie entre un autre élément de sécurité et ledit serveur par l'intermédiaire de l'agent d'administration.

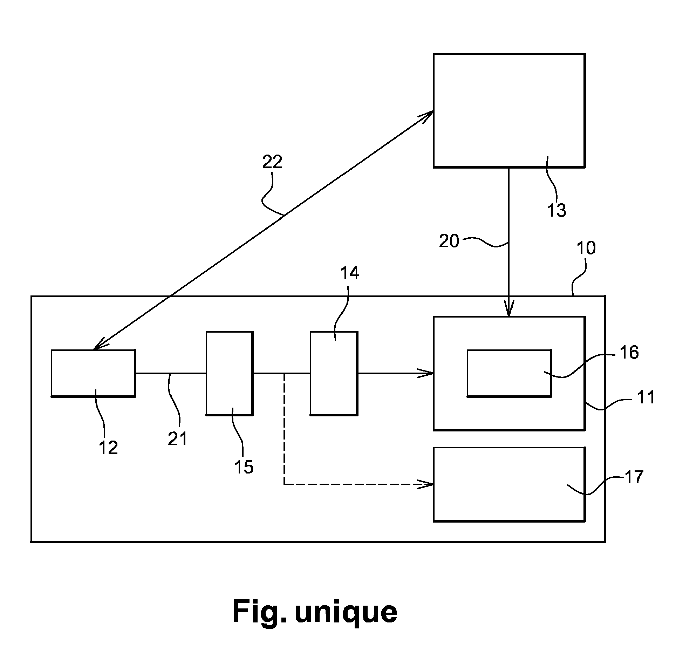

D'autres caractéristiques et avantages de la présente invention apparaîtront à la lecture de la description suivante d'un mode de mise en oeuvre préférentiel, donné à titre illustratif et non limitatif, et de la figure unique annexée qui représente un système mettant en oeuvre la présente invention.

Le système représenté comprend un terminal 10 coopérant avec un élément de sécurité 11 tel qu'un UICC ou eUICC. Le terminal 10 comporte également un agent d'administration 12 apte à communiquer avec un serveur distant 13 pour administrer, dans un premier mode de mise en oeuvre, l'élément de sécurité 11. L'agent d'administration 12 est extérieur à l'élément de sécurité 11 et 12 communique avec l'élément de sécurité 11 par l'intermédiaire d'un modem en bande de base (même question que précédemment) 14 et du système d'exploitation 15 du terminal 10.

Selon l'invention, l'élément de sécurité 11 comporte une application 16 faisant office de proxy (qui sera appelée par la suite application proxy). Cette application proxy 16 a pour fonction de recevoir du serveur 13 un message de demande de connexion (étape 20) de la part du serveur 13, ce message renfermant une demande de connexion de l'agent d'administration 12 au serveur 13. L'application proxy 16 stocke ce message.

Le message envoyé par le serveur 13 peut être un SMS standardisé tel que défini par GlobalPlatform Device Secure Element Remote Application Management. Il peut être sécurisé tel que défini dans cette spécification.

L'application proxy 16 stocke ce message et attend que l'agent d'administration 12 vienne le récupérer. Ceci peut être réalisé par un pooling (interrogation) régulier de l'application proxy 16 par l'agent d'administration 12 sur une API (Application Programming Interface en anglais) locale (étape 21). Si un message de demande de connexion est présent dans l'application proxy 16, l'agent d'administration 12 le récupère et ouvre (étape 22) un canal de communication avec le serveur 13. L'ouverture du canal de communication s'opère en prenant en compte des paramètres compris dans le message stocké dans l'application proxy 16. Une session OTA est ainsi ouverte entre le serveur 13 et l'élément de sécurité 11 par l'intermédiaire de l'agent d'administration 12. Le serveur 13 peut dès lors administrer l'élément de sécurité 11 par l'intermédiaire de l'agent d'administration 12.

Dans un second mode de mise en oeuvre, l'ouverture de la session OTA permet d'administrer un autre élément de sécurité 17 coopérant avec le terminal 10, tel que par exemple une carte micro SD.

Dans ce cas là, lors de l'établissement de la session d'administration, le serveur 13 renvoie dans la réponse http l'identifiant de l'élément de sécurité visé (X-Admin-Targeted-SE) ainsi que l'AID de l'application de cet élément de sécurité (X-Admin-Targeted-Application).

D'autres éléments de sécurité peuvent être administrés de la même manière, l'essentiel étant que l'application proxy 16 soit présente au niveau de l'UICC ou de l'eUICC 11 afin qu'elle puisse recevoir et stocker le SMS envoyé par le serveur distant 13.

L'application proxy 16 peut comprendre une API permettant à l'agent d'administration 12 de l'interroger à l'aide d'une commande AT, par exemple une commande AT + CSIM ou AT + CGLA.

L'invention concerne également un terminal 10 comprenant un agent d'administration 12 et un élément de sécurité 11, cet élément de sécurité 11 comprenant une application proxy 16 permettant de mettre en oeuvre le procédé selon l'invention décrit ci-dessus.

L'invention concerne également un élément de sécurité 11 comprenant une application proxy 16 apte à mettre en oeuvre le procédé tel que décrit précédemment.

Enfin, l'invention concerne également le serveur 13 apte à transmettre à l'application proxy 16 comprise dans l'élément de sécurité 11 une demande de déclenchement d'une session OTA (étape 20) et à établir cette session OTA à la demande de l'agent d'administration 12 compris dans le terminal 10.

Dans le premier mode de mise en oeuvre, cette session OTA (étape 22) est établie entre l'élément de sécurité 11 et le serveur 13 par l'intermédiaire de l'agent d'administration 12, alors que dans le second mode de mise en oeuvre, la session OTA est établie entre l'autre élément de sécurité 17 et le serveur 13 par l'intermédiaire de l'agent d'administration 12.

## Revendications

1. Procédé de déclenchement d'une session OTA (22) entre un terminal (10) et un serveur distant (13), ledit terminal (10) comprenant un agent d'administration (12) et un élément de sécurité (11), **caractérisé en ce que** ledit élément de sécurité (11) comprend une application proxy (16), et **en ce qu'**il consiste à :
a- Transmettre dudit serveur distant (13) à ladite application proxy (16) un message de demande de connexion dudit agent d'administration (12) ;
b- Stocker ledit message dans ladite application proxy (16) ;
c- Transmettre ledit message audit agent d'administration (12) lorsque ce dernier interroge ladite application proxy (16) pour savoir si ladite application proxy (16) a un message à lui transmettre ;
d- Ouvrir ladite session OTA (22) entre ledit agent d'administration (12) et ledit serveur distant (13).

2. Procédé selon la revendication 1, **caractérisé en ce que** l'étape -d- est mise en oeuvre afin d'administrer ledit élément de sécurité (11).

3. Procédé selon la revendication 1, **caractérisé en ce que** l'étape -d- est mise en oeuvre afin d'administrer un autre élément de sécurité (17) coopérant avec ledit terminal (10).

4. Procède selon la revendication 1, **caractérisé en ce que** ledit élément de sécurité (11) est un UICC ou un eUICC.

5. Procédé selon la revendication 5, **caractérisé en ce que** ledit autre élément de sécurité est une carte micro SD.

6. Procédé selon l'une des revendications 1 à 5, **caractérisé en ce que** l'étape -c-consiste à régulièrement interroger ladite application proxy (16) par ledit agent d'administration (12) afin de vérifier si ladite application proxy (16) a un message à lui transmettre.

7. Procédé selon l'une des revendications 1 à 6, **caractérisé en ce que** ladite session OTA (22) est ouverte à l'aide de paramètres compris dans ledit message transmis lors de l'étape -a-.

8. Procédé selon l'une des revendications 1 à 7, **caractérisé en ce que** ladite application proxy (16) comprend une API permettant audit agent d'administration (12) de l'interroger à l'aide d'une commande AT.

9. Procédé selon la revendication 8, **caractérisé en ce que** ladite commande AT est une commande AT + CSIM ou AT + CGLA.

10. Terminal (10) comprenant un agent d'administration (12) et un élément de sécurité (11), **caractérisé en ce que** ledit élément de sécurité (11) comprend une application proxy (16) permettant de mettre en oeuvre le procédé selon l'une des revendications 1 à 9.

11. Elément de sécurité (11) comprenant une application proxy (16) apte à mettre en oeuvre le procédé selon l'une des revendications 1 à 9.

12. Serveur (13) apte à transmettre à une application proxy (16) comprise dans un élément de sécurité (11) une demande (20) de déclenchement d'une session OTA et à établir ladite session OTA (20) à la demande d'un agent d'administration (12) compris dans un terminal (10).

13. Serveur (13) selon la revendication 12, **caractérisé en ce que** ladite session OTA (22) est établie entre ledit élément de sécurité (11) et ledit serveur (13) par l'intermédiaire dudit agent d'administration (12).

14. Serveur (13) selon la revendication 12, **caractérisé en ce que** ladite session OTA (22) est établie entre un autre élément de sécurité (17) et ledit serveur (13) par l'intermédiaire dudit agent d'administration (12).
